# EUROPÄISCHE PATENTSCHRIFT

(11) **EP 3 533 706 B1**
(45) Veröffentlichungstag und Bekanntmachung des Hinweises auf die Patenterteilung: **15.02.2023**
(21) Anmeldenummer: 18159748.5
(22) Anmeldetag: 02.03.2018
(51) Int. Cl.: B64C 1/10

(54) **DRUCKSCHOTT FÜR EIN LUFTFAHRZEUG**
PRESSURE BULKHEAD FOR AN AIRCRAFT
CLOISON DE PRESSURISATION POUR UN AÉRONEF

(43) Veröffentlichungstag der Anmeldung: 04.09.2019
(73) Patentinhaber: Premium AEROTEC GmbH, 86179 Augsburg (DE)
(72) Erfinder: Dominik, Rath, 86836 Untermeitingen (DE); Raimund, Bucher, 86807 Buchloe (DE); Klaus, Edelmann, 27777 Ganderkesee (DE); Dr. Angelos, Miaris, 28209 Bremen (DE); Frank, Stellberger, 20257 Hamburg (DE)
(74) Vertreter: LKGLOBAL Lorenz & Kopf PartG mbB Patentanwälte

(56) Entgegenhaltungen:
- EP-A1- 2 813 425
- EP-A1- 3 075 524
- WO-A1-99/24316

## Beschreibung

Die vorliegende Erfindung betrifft ein Druckschott zum druckdichten axialen Abschluss eines unter einen Innendruck setzbaren Druckrumpfs eines Luft- oder Raumfahrzeugs.

Um einen Innendruck einer Passagierkabine auch bei großen Flughöhen auf einem geeigneten Niveau, z.B. Atmosphärendruck, zu halten, weisen Passagierflugzeuge an einem hinteren axialen Ende ein Druckschott auf, welches eine Druckdichtigkeit der Passagierkabine gegenüber der Primarstruktur des Flugzeugrumpfes herstellt. Im modernen Flugzeugbau wird hierbei versucht, soweit wie möglich Gewicht einzusparen und gleichzeitig eine ausreichende Steifigkeit und Robustheit gegenüber den vielfältig auftretenden Lasten zu erreichen. Druckschotts können hierzu aus metallischen Materialien wie beispielsweise Aluminium oder einer Aluminiumlegierung und/oder faserverstärkten Verbundmaterialien wie kohlenstofffaserverstärkter Kunststoff (CFK), insbesondere mit einer Kunststoffmatrix aus Epoxidharz, gefertigt werden. Metallische Druckschotts sind häufig kostengünstiger herstellbar als Druckschotts aus einem derartigen Faserverbundmaterial, haben dafür jedoch typischerweise ein deutlich größeres Gewicht.

Das eigentliche Druckschott weist in typischen Ausgestaltungen eine kalottenartige, in Heckrichtung des Flugzeugs ausgebuchtete Grundform auf, die auch als Druckkalotte bezeichnet wird. Diese Druckkalotte kann weiterhin mit länglichen und/oder netzartigen Versteifungselementen in besonders lastbeanspruchten Bereichen versehen sein, vgl. zum Beispiel die Druckschriften EP 2098448 A1, EP 2 485 941 B1 und DE 10 2013 224 233 A1. Generell kann ein solches Druckschott weitere Strukturelemente umfassen, die zum druckdichten Verschließen des betreffenden Flugzeugrumpfbereichs und zur Weiterleitung der aus dem Innendruck resultierenden Kräfte in die Rumpfschalenstruktur des Flugzeugs erforderlich sind. Beispielsweise kann die Druckkalotte über Zwischenstücke und weitere Bauteile an einen oder mehrere umlaufende Spanten und/oder eine Außenhaut des Rumpfes angebunden werden. Mitunter weisen solche Druckschotts vereinzelte Durchgangsöffnungen für Versorgungsleitungen wie Rohre, Hydraulik- und/oder Pneumatikleitungen oder dergleichen auf (vgl. beispielsweise die DE 10 2013 224 233 A1). Um Druckdichtigkeit des Druckschotts weiterhin zu gewährleisten, können diese Öffnungen nach der Montage dauerhaft druckdicht verschlossen werden, z.B. mit einem fest angebrachten Beschlag.

EP 3075524 A1 befasst sich mit einem Druckschott, das aus einem Kompositwerkstoff hergestellt ist. Gemäß der bei Espacenet verfügbaren Übersetzung der Zusammenfassung der EP 3075524 umfasst ein Druckschott mehrere übereinander angeordnete Materiallagen, wobei jede Materiallage in ein Matrixmaterial eingebettete Verstärkungsfasern enthält. Die Verstärkungsfasern in mindestens einer ersten Materiallage sind so orientiert, dass ihre Längsachsen in einem Winkelbereich von ± 2° um eine radiale Richtung des Druckschotts liegen.

WO 1999/024316 A1 befasst sich mit einem Druckschott aus Faserverbundwerkstoffen. Gemäß der Zusammenfassung der WO 1999/024316 A1 ist ein Druckspant vorgesehen, insbesondere für Flugzeuge, bestehend aus einer vorzugsweise einstückigen Kalotte aus Faserverbundwerkstoffen und Einrichtungen zur Versteifung der Kalotte, welche mit der Kalotte verbunden oder zusammen mit der Kalotte einstückig hergestellt sind. Zur Schaffung eines möglichst leichten und kostengünstig herstellbaren Druckspants, der den Belastungsanforderungen, insbesondere von großen Flugzeugen, genügt, und bei dem die Gefahr der Zerstörung durch Umstülpen der Kalotte in Richtung Flugzeuginnenraum reduziert wird, ist vorgesehen, dass die Kalotte im wesentlichen gleichmäßige Dicke aufweist, und dass zumindest eine Einrichtung zur Versteifung der Kalotte im Mittenbereich der konkaven Seite der Kalotte auf diese aufgesetzt ist. Vorteilhafterweise ist die Einrichtung zur Versteifung der Kalotte im Mittenbereich durch eine entgegen der Krümmung der Kalotte orientierte Versteifungsstruktur, beispielsweise eine kegelstumpfförmige, becherförmige oder parabelförmige Struktur gebildet, wobei zwischen Kalotte und Versteifungsstruktur ein Hohlraum angeordnet ist.

EP 2813425 A1 befasst sich ebenfalls mit einem Druckschott. Gemäß der bei Espacenet verfügbaren Übersetzung der Zusammenfassung der EP 2813425 A1 ist ein Druckschott vorgesehen, der eine Schottwand mit einer radial inneren Scheibe und einem radial äußeren Kompressionsring umfasst, wobei der äußere Kompressionsring verstärkt ist, um meridionale und Umfangsspannungen auszugleichen, die von der Schottwand getragen werden als Reaktion auf eine Druckdifferenz über dem Druckschott; wobei die radial innere Scheibe mit dem äußeren Kompressionsring eine Einheit bildet.

Vor diesem Hintergrund liegt der vorliegenden Erfindung die Aufgabe zugrunde, verbesserte Lösungen für den druckdichten axialen Abschluss einer Passagierkabine zu finden.

Erfindungsgemäß wird diese Aufgabe gelöst durch ein Druckschott mit den Merkmalen des Patentanspruchs 1 und durch ein Luft- oder Raumfahrzeug mit den Merkmalen des Patentanspruchs 10.

Eine der vorliegenden Erfindung zugrunde liegende Idee besteht darin, eine Druckkalotte eines Druckschotts derartig aus mehreren Einzelsegmenten mit integrierten Versteifungen aufzubauen, dass die aufgewendeten Kosten in etwa denjenigen einer konventionellen Metallstruktur, z.B. eine Aluminiumstruktur, entsprechen. Anders als bei herkömmlichen Lösungen, werden in der vorliegenden Erfindung hierzu relativ einfach aufgebaute Faserverbundbauteile in kostengünstiger Weise mit einem thermoplastischen Kunststoff gefertigt und im Anschluss zu einer Druckkalotte zusammengefügt. Die Versteifungen werden hierbei vorteilhafterweise direkt mit in die Einzelsegmente integriert. Herkömmliche Aufbauten folgen im Gegensatz hierzu zwei unterschiedlichen Ansätzen. Bei einem weitverbreiteten Ansatz wird ein Kalottenkörper aus einem Metallmaterial gefertigt, auf den im Anschluss entsprechende Versteifungselemente aus Metall genietet werden (eine integrale Herstellung der Versteifungselemente ist praktisch nicht möglich in dieser Variante). Bei anderen herkömmlichen Lösungen wird eine Druckkalotte als komplexer, insbesondere monolithischer, Faserverbundaufbau bereitgestellt, der typischerweise mit einem Harzinjektionsverfahren (englisch: "Resin Transfer Molding", RTM) oder mittels Handlaminieren oder ähnlichen aufwendigen Verfahren gefertigt ist. Dem gegenüber bietet die Verwendung eines thermoplastischen Kunststoffs gemäß der vorliegenden Erfindung unter anderem den Vorteil, dass sich einfach geformte, flächige Strukturen mit offen ausgebildeten Versteifungselementen schnell und effizient produzieren lassen. Beispielsweise kann eine Kunststoffplatte, z.B. ein Organoblech mit einem thermoplastischen Kunststoff wie Polyphenylensulfid (PPS) oder dergleichen, erwärmt und mit einem einfachen Werkzeug mit Verstärkungsprofilen wie Z-förmigen oder Ω-förmigen Versteifungen geformt werden, z.B. in einer Presse. Im Ergebnis können sowohl Gewicht gegenüber metallischen
Lösungen und als auch Kosten gegenüber monolithischen Faserverbundlösungen eingespart werden. Die Einzelsegmente können mit geringer Durchlaufzeit gefertigt werden, wobei keine Zusatzaufwande für Versteifungen oder dergleichen zu investieren sind. Aufgrund des modularen Aufbaus sind einfache geometrische Änderungen bzw. Anpassungen jederzeit schnell umsetzbar. Grundsätzlich können die Kalottensegmente in identischer Weise gefertigt werden und lediglich in einem zweiten Fertigungsschritte nach Anwendung nachträglich mit unterschiedlichen zusätzlichen Verstärkungen, Durchlassen und dergleichen ausgebildet werden.

Erfindungsgemäß ist ein Druckschott zum druckdichten axialen Abschluss eines unter einen Innendruck setzbaren Druckrumpfes eines Luft- oder Raumfahrzeugs vorgesehen. Das Druckschott umfasst mehrere Kalottensegmente, welche jeweils mit einer integrierten Versteifung einstückig aus einem faserverstärkten thermoplastischen Kunststoff gefertigt sind und zu einer Druckkalotte aneinandergefügt sind.

Unter einer Druckkalotte im Sinne der Erfindung wird eine kalottenförmige Druckwand innerhalb eines Rumpfes eines Luft- oder Raumfahrzeugs verstanden, welche allgemein eine konkave Innenfläche und eine konvexe Außenfläche aufweist, die derart gekrümmt sind, dass eine Ausbuchtung in axialer Richtung innerhalb des Rumpfs gebildet wird, z.B. in Heckrichtung.

Ein Druckrumpf im Sinne der Erfindung ist ein druckdicht abschließbarer Rumpfbereich eines Luft- oder Raumfahrzeugs, welcher beispielsweise auf Atmosphärendruck gehalten werden kann. Ein Druckrumpf im Sinne der Erfindung kann beispielsweise eine Passagierkabine mit einem oder mehreren Passagierdecks und/oder einen Frachtraum bzw. ein Frachtdeck umfassen.

Vorteilhafte Ausgestaltungen und Weiterbildungen ergeben sich aus den weiteren Unteransprüchen sowie aus der Beschreibung unter Bezugnahme auf die Figuren.

Gemäß der Erfindung sind die Kalottensegmente nebeneinander entlang einer azimutalen Richtung der Druckkalotte um einen Mittelpunkt der Druckkalotte herum angeordnet. Die Kalottensegmente können beispielsweise als sphärische Dreiecke geformt sein. Insbesondere können die sphärischen Dreiecke auf den Mittelpunkt der Druckkalotte hin zulaufen. Dem Fachmann wird hierbei klar sein, dass aus fertigungstechnischen Gründen eine Öffnung um den Mittelpunkt der Druckkalotte herum verbleiben kann, sodass die Kalottensegmente lediglich im Wesentlichen die Form eines sphärischen Dreiecks aufweisen. Das sphärische Dreieck kann hierbei insbesondere an einer radial innen liegenden Ecke abgestumpft sein. Die Kalottensegmente können somit ringförmig um den Mittelpunkt herum mit einer konisch zulaufenden, sphärisch gekrümmten Form angeordnet sein. Die Kalottensegmente und somit die Druckkalotte weisen hierbei grundsätzlich konkave Innenflächen und konvexe Außenflächen auf, um die aus dem Innendruck resultierenden Kräfte des Flugzeugs aufzufangen und in die Rumpfschale einzuleiten. Die mittige Öffnung kann beispielsweise im Innern durch einen Deckel oder dergleichen druckdicht abgeschlossen werden.

Gemäß der Erfindung ist die integrierte Versteifung entlang einer radialen Richtung der Druckkalotte ausgerichtet. Die integrierten Versteifungen können somit auf den Mittelpunkt der Druckkalotte hin ausgerichtet sein.

Gemäß der Erfindung weist die integrierte Versteifung ein Versteifungsprofil auf. Das Versteifungsprofil steht von einer konkaven Innenfläche des jeweiligen Kalottensegments ab. Das Versteifungsprofil kann somit bezogen auf einen Passagierkabine in einem Rumpf eines Flugzeugs innen angeordnet sein.

Gemäß einer Weiterbildung kann das Versteifungsprofil Z-förmig und/oder Ωförmig ausgebildet sein. Prinzipiell sind jedoch ebenso weitere offene Versteifungsprofile vorgesehen, welche sich einfach entformen lassen.

Gemäß der Erfindung ist die integrierte Versteifung einseitig als Randversteifung ausgebildet. Die Kalottensegmente sind jeweils über die integrierte Versteifung an einen Fügebereich des nächstliegenden Kalottensegments gefügt. Der Fügebereich des nächstliegenden Kalottensegments kann versteift oder unversteift sein. Die integrierte Versteifung ist radial verlaufend auf einer Seite der Kalottensegmente angeordnet. Die einzelnen Kalottensegmente können somit kuchenstuckartig aneinandergefügt werden, indem jeweils ein Kalottensegment über die Seite mit der integrierten Randversteifung an eine verstärkte oder unverstärkte Seite eines anderen Kalottensegments gefügt wird.

Gemäß einer Weiterbildung können die Kalottensegmente durch Nieten, Schweißen und/oder Kleben aneinandergefügt sein.

Gemäß einer Weiterbildung kann das Druckschott weiterhin lokale Verstärkungen aufweisen. Die lokalen Verstärkungen können an die Kalottensegmente gefügt sein. Beispielsweise kann die Druckkalotte über diese Verstärkungen an dem Rumpf des Luftfahrzeugs befestigt werden. In einem konkreten Beispiel wird die Druckkalotte über mehrere lokale Verstärkungen an einem umlaufenden Ringspant des Luftfahrzeugs befestigt.

Gemäß einer Weiterbildung können die lokalen Verstärkungen durch Nieten, Schweißen und/oder Kleben an die Kalottensegmente gefügt sein.

Gemäß einer Weiterbildung kann zumindest ein Anteil der lokalen Verstärkungen entlang der azimutalen Richtung der Druckkalotte ausgerichtet sein. Beispielsweise können lokale Verstärkungen an einem äußeren Rand der Kalottensegmente bezogen auf den Mittelpunkt der Druckkalotte entlanglaufen, sodass eine umlaufende äußere Ringverstärkung entlang eines äußeren Rands der Druckkalotte gebildet wird.

Gemäß einer Weiterbildung kann zumindest ein Anteil der lokalen Verstärkungen ringförmig um Durchgangsöffnungen in den Kalottensegmenten angeordnet sein. Die Durchgangsöffnungen können beispielsweise als Systemdurchführungen für Rohre, Hydraulik- und/oder Pneumatikleitungen oder dergleichen dienen.

Gemäß einer Weiterbildung können die Kalottensegmente eine variable Kalottendicke aufweisen. Beispielsweise können mehrere Kalottensegmente mit unterschiedlicher Dicke modular miteinander kombiniert werden.

Gemäß einer Weiterbildung können Fügeübergänge zwischen den Kalottensegmenten mit einem Dichtmittel, einem Füllmaterial und/oder geschlossen sein. Füllmaterialien umfassen hierbei beispielsweise Zwickelfuller und ähnliche Materialien. Als Abdichtelemente können beispielsweise Dichtkeile, Kappen oder andere dem Fachmann bekannte Elemente zum Einsatz kommen. Darüber hinaus können aufgrund der thermoplastischen Ausbildung der Kalottensegmente weitere vorteilhafte Ansätze verfolgt werden. Beispielsweise können Schnipsel aus einem thermoplastischen Kunststoff in die Fügeübergänge eingebracht und dort mit den Kalottensegmenten verschmolzen bzw. verschweißt werden. Hierdurch kann unter anderem sichergestellt werden, dass die Außenfläche des Fügeübergangs möglichst plan ausgebildet ist, sodass die Druckkalotte mit minimalen Toleranzen an einem metallischen Ringspant oder dergleichen befestigt werden kann.

Weiterhin ist ein Luft- oder Raumfahrzeug mit einem erfindungsgemäßen Druckschott vorgesehen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele naher erläutert. Es zeigen dabei:
- Fig. 1: schematische perspektivische Außenansicht eines Druckschotts gemäß einer Ausführungsform der Erfindung;
- Fig. 2: schematische perspektivische Innenansicht des Druckschotts aus Fig. 1;
- Fig. 3: schematische Seitenansicht des Druckschotts aus Fig. 1;
- Fig. 4: schematische perspektivische Detailansicht eines Fügeübergangs des Druckschotts aus Fig. 2;
- Fig. 5: schematische perspektivische Detailansicht von weiteren Fügeübergängen des Druckschotts aus Fig. 2; und
- Fig. 6: schematische Seitenansicht eines Luftfahrzeugs mit dem Druckschott aus Fig. 1-5.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

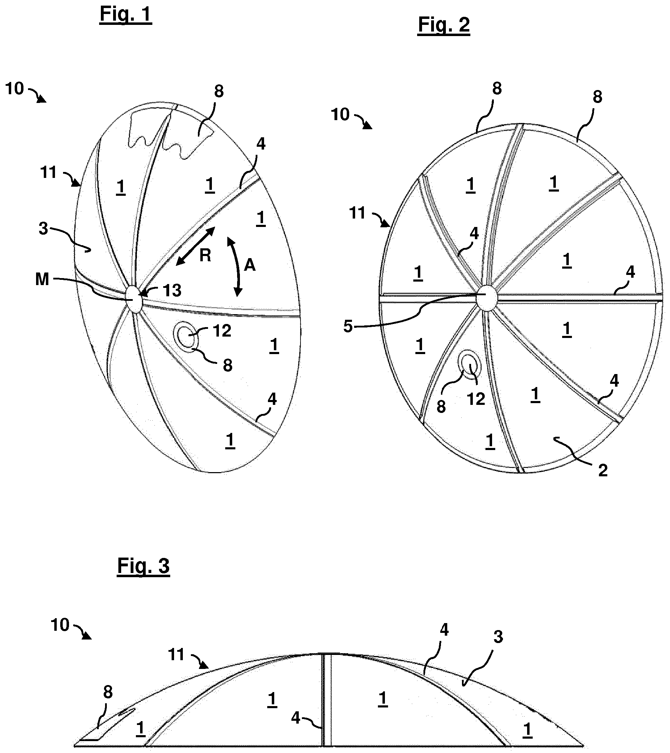

Figur 1 zeigt eine schematische perspektivische Außenansicht eines Druckschotts 10 gemäß einer Ausführungsform der Erfindung. Fig. 2 und 3 zeigen das Druckschott 10 in einer perspektivischen Innenansicht und einer Seitenansicht.

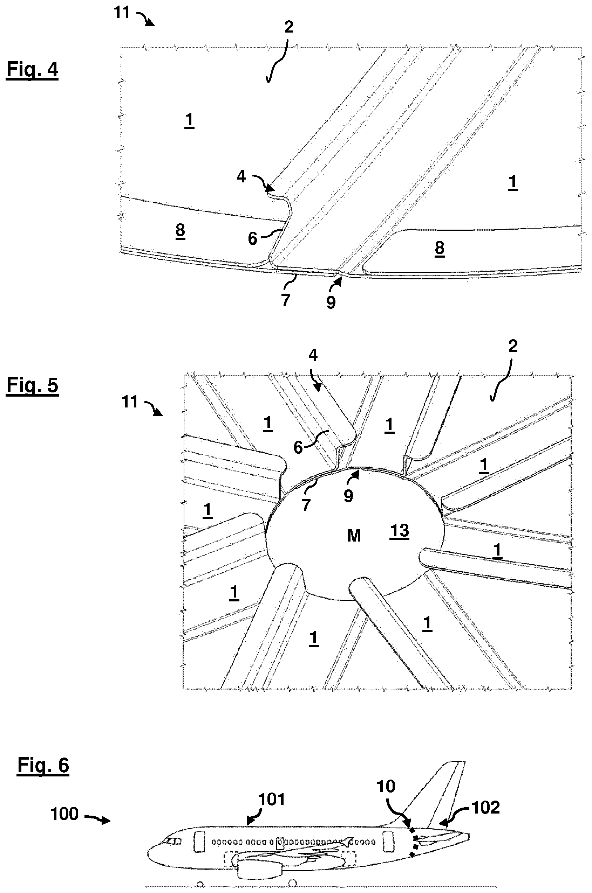

Das Druckschott 10 bildet einen druckdichten Abschluss eines Druckrumpfs 101 eines Luftfahrzeugs 100 gegenüber einem Heckbereich 102 des Luftfahrzeugs 100 in einer axialen Richtung (vgl. Fig. 6). Das dargestellte Luftfahrzeug 100 kann beispielsweise ein Passagierflugzeug, z.B. ein Schmalrumpfflugzeug, sein, welches einen unter Atmosphärendruck gehaltenen Druckrumpf 101 mit einem darin befindlichen Passagierdeck aufweist. Das Passagierdeck kann sich beispielsweise über die gesamte Längserstreckung des Druckrumpfs 101 von einem Cockpit (nicht eingezeichnet) bis zu dem Druckschott 10 ausdehnen. Die gezeigte Ausführung des Luftfahrzeugs 100 ist lediglich als Beispiel für ein allgemeines Passagierflugzeug zu verstehen. Ebenso können beispielsweise weitere Passagierdecks, Frachtdecks etc. vorgesehen sein, z.B. zwei untereinanderliegende Passagierdecks.

Das Druckschott 10 umfasst eine Druckkalotte 11 mit einer konkaven Innenfläche 2 und einer konvexen Außenfläche 3. Die Druckkalotte 11 bildet eine Druckwand mit einer Ausbuchtung entgegen einer Flugrichtung, d.h. in Richtung des Heckbereichs 102. Die Druckkalotte 11 ist aus mehreren Kalottensegmenten 1 zusammengefügt, welche jeweils mit einer integrierten Versteifung 4 einstückig aus einem faserverstärkten thermoplastischen Kunststoff gefertigt sind. Die Kalottensegmente 1 sind nebeneinander entlang einer azimutalen Richtung A der Druckkalotte 11 um einen Mittelpunkt M der Druckkalotte 11 herum angeordnet. Die integrierte Versteifung 4 der Kalottensegmente 1 ist jeweils entlang der radialen Richtung R der Druckkalotte 11 ausgerichtet. Die Kalottensegmente 1 haben in etwa die Form von sphärischen Dreiecken, welche auf den Mittelpunkt der Druckkalotte 11 hin in der radialen Richtung R der Druckkalotte 11 zulaufen, wobei die Dreiecke an einer radial innen liegenden Ecke abgestumpft sind. Aus fertigungstechnischen Gründen ist um den Mittelpunkt M der Druckkalotte 11 herum ein Mitteldurchgang 13 freigelassen, welcher von der konkaven Innenfläche 2 der Druckkalotte 11 her mit einem Deckel 5 druckdicht verschlossen ist (vgl. Fig. 2).

Darüber hinaus sind rein beispielhaft eine Vielzahl unterschiedlicher lokaler Verstärkungen 8 an die Kalottensegmente 1 gefügt. Die lokalen Verstärkungen 8 können unterschiedlichen Zwecken dienen. Beispielsweise ist ein Anteil der lokalen Verstärkungen 8 ringförmig entlang der azimutalen Richtung Ader Druckkalotte 11 an einem äußeren Rand der Druckkalotte 11 angeordnet. Einerseits verstärken diese Elemente die Druckkalotte 11 in einem äußeren Bereich. Andererseits kann die Druckkalotte 11 über diese Elemente an den Druckrumpf 101 des Luftfahrzeugs 100 angebunden werden, z.B. an einen umlaufenden Ringspant (nicht eingezeichnet), wobei unterschiedliche Verbindungselemente vorgesehen sein können (ebenfalls nicht eingezeichnet). Ferner können weitere spezielle lokale Verstärkungen 8 für die Anbindung an den Druckrumpf 101 bzw. für die Aufnahme und/oder Weiterleitung von Rumpflasten ausgebildet werden. Rein beispielhaft sind oben in Fig. 1 zwei weitere lokale Verstärkungen 8 eingezeichnet, welche beispielsweise zur Ankopplung des Druckschotts 10 an ein Seitenleitwerk oder ähnlich dienen können. Ein derartiges Luftfahrzeug 100 bzw. ein derartiger Druckrumpf 101 ist im Flug erheblichen Lasten und Beanspruchungen ausgesetzt. Verschiedene Kräfte und
Momente sind hierbei zu berücksichtigen, etwa Querkräfte, Torsions- und Biegemomente usw. Außerdem werden auch durch den erheblichen Innendruck Kräfte ausgeübt. Das Druckschott 10 bzw. die Druckkalotte 11 sind dazu ausgebildet, diese eingehenden und/oder ausgehenden Lasten aufzufangen und/oder abzuleiten.

Ein weiterer Anteil der lokalen Verstärkungen 8 kann ringförmig um Durchgangsöffnungen 12 in den Kalottensegmenten 1 angeordnet sein (beispielhaft ist lediglich eine Durchgangsöffnung 12 eingezeichnet). Eine derartige Durchgangsöffnung 12 kann zu unterschiedlichen Zwecken genutzt werden. Beispielsweise kann diese zur Systemdurchführung für Rohre, Hydraulik- und/oder Pneumatikleitungen oder dergleichen dienen. In alternativen Ausführung können weitere Durchgangsöffnungen 12 vorgesehen sein, z.B. radial außen an der Druckkalotte 11, um Inspektions-, Montage und/oder Wartungsarbeiten an dem Druckschott 10 und insbesondere an dem umliegenden Heckbereich 102 durchzuführen. Die Durchgangsöffnung 12 kann über einen Druckdeckel druckdicht verschlossen sein (hier nicht eingezeichnet).

Anhand von Fig. 4 und 5 sollen im Folgenden die Fügeübergänge zwischen den einzelnen Kalottensegmenten 1 erläutert werden. Hierzu zeigt Fig. 4 beispielhaft eine schematische perspektivische Detailansicht eines Fügeübergangs 9 des Druckschotts aus Fig. 2. Fig. 5 zeigt in Ergänzung hierzu eine schematische perspektivische Detailansicht von weiteren Fügeübergängen 9 des Druckschotts 11 im Bereich des Mitteldurchgangs 13 um den Mittelpunkt M herum. Der in Fig. 2 abgebildete Deckel 5 über dem Mitteldurchgang 13 ist in Fig. 5 der Übersichtlichkeit halber nicht dargestellt.

Wie man den Figuren entnehmen kann, weisen die integrierten Versteifungen 4 jeweils ein in etwa Z-förmiges Versteifungsprofil 6 auf, welches von der konkaven Innenfläche 2 desjeweiligen Kalottensegments 1 absteht. Die integrierte Versteifung 4 ist jeweils lediglich einseitig als Randversteifung an den Kalottensegmenten 1 ausgebildet. Jedes Kalottensegment 1 weist in diesem konkreten Beispiel auf einer gegenüberliegenden Seite einen unversteiften Fügebereich 7 auf, auf dem das jeweils nächstliegende Kalottensegment 1 mit der zugehörigen integrierten Versteifung 4 (Randversteifung) aufliegt. Prinzipiell kann der Fügebereich 7 in alternativen Ausführungen ebenso versteift sein, z.B. mit einer Aufdickung oder dergleichen versehen sein. Die Kalottensegmente 1 können an den Fügeübergängen 9 beispielsweise mittels Nieten, Schweißen und/oder Kleben oder einem anderen geeigneten Verfahren aneinandergefügt sein. Ebenso können die lokalen Verstärkungen 8 und/oder der oder die (Druck-)Deckel 5 mit entsprechenden Verfahren befestigt und Druckdicht verschlossen sein. Die Fügeübergängen 9 können samt möglicherweise vorhandener Fügenuten und/oder ähnlicher abzudichtender, zu füllender bzw. zu glättender Aussparungen mit einem Dichtmittel, einem Füllmaterial und/oder Abdichtelementen gefüllt, geglättet und/oder druckdicht verschlossen sein.

Die Wahl eines thermoplastischen Kunststoffs bietet hierbei mehrere Vorteile. Insbesondere lassen sich derartige Kalottensegmente 1 mit einem Z-förmigen Versteifungsprofil 6 zeit- und kosteneffizient fertigen, z.B. indem faserverstärkte PPS-Platten, Organobleche oder dergleichen erwärmt und in einer Presse geformt werden. Eine integrierte Versteifung 4 mit Z-förmigem Versteifungsprofil 6 lasst sich ohne größeren Aufwand entformen. Im Anschluss sind die Kalottensegmente 1 lediglich miteinander zu verschweißen, zu vernieten und/oder zu verkleben (z.B. mit randseitigem überlapp). Die integrierten Versteifungen 4 sorgen hierbei für eine ausreichende Drucksteifigkeit der Druckkalotte 11. Das gezeigt Druckschott 10 bzw. die gezeigte Druckkalotte 11 ist deutlich leichter als vergleichbare Ausführungen aus einem Metallmaterial und darüber hinaus erheblich kostengünstiger in der Herstellung als herkömmliche Faserverbundlösungen, welche mittels RTM, Handlaminieren oder dergleichen Verfahren gefertigt sind. Die Kalottensegmente 1 dienen gewissermaßen als modulare Bauteile, welche beispielsweise in unterschiedlichen Ausführungen, z.B. mit unterschiedlichen Kalottendicken, mit oder ohne Durchgangsöffnungen usw. bereitgestellt werden können. Derart sind einfache individuelle kundenspezifische Änderungen schnell und ohne großen Aufwand möglich.

In der vorangegangenen detaillierten Beschreibung sind verschiedene Merkmale zur Verbesserung der Stringenz der Darstellung in einem oder mehreren Beispielen zusammengefasst werden. Es sollte dabei jedoch klar sein, dass die obige Beschreibung lediglich illustrativer, keinesfalls jedoch beschränkender Natur ist. Sie dient der Abdeckung aller Alternativen und Modifikationen der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Beispielsweise können neben Z-förmigen Versteifungsprofilen 6 ebenso anders geformte "offene" Verstärkungsprofile zum Einsatz kommen, welche sich mit den bekannten Fertigungsverfahren für faserverstärkte thermoplastische Kunststoffe leicht formen lassen, z.B. Ω-förmige Profile usw. Beispielsweise können die Kalottensegmente 1 eine mittig ausgebildete Versteifung mit einem oder mehreren Ωförmigen Versteifungsprofilen aufweisen. Diese Ω-förmigen Versteifungsprofile können zusätzliche oder alternativ zu den obigen Z-förmigen Versteifungsprofilen 6 (Randversteifungen) vorgesehen sein. Derartige Versteifungen können ebenso wie die Z-förmigen Versteifungsprofile 6 entlang der radialen Richtung R der Druckkalotte 11 verlaufen. In den gezeigten Darstellungen wurden acht Kalottensegmente 1 aneinandergefügt. Ebenso kann eine unterschiedliche Anzahl von Kalottensegmenten 1 zu einer Druckkalotte 11 gefügt werden, z.B. zwei, drei, vier, fünf, sechs, sieben, neun oder mehr Kalottensegmente.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Kalottensegment
- 2: konkave Innenfläche
- 3: konvexe Außenfläche
- 4: integrierte Versteifung
- 5: Deckel
- 6: Versteifungsprofil
- 7: Fügebereich
- 8: lokale Verstärkung
- 9: Fügeübergang
- 10: Druckschott
- 11: Druckkalotte
- 12: Durchgangsöffnung
- 13: Mitteldurchgang
- 100: Luftfahrzeug
- 101: Druckrumpf
- 102: Heckbereich
- M: Mittelpunkt
- R: radiale Richtung
- A: azimutale Richtung

## Patentansprüche

1. Druckschott (10) zum druckdichten axialen Abschluss eines unter einen Innendruck setzbaren Druckrumpfes (101) eines Luft- oder Raumfahrzeugs (100), mit:
mehreren Kalottensegmenten (1), welche jeweils mit einer integrierten Versteifung (4) einstückig aus einem faserverstärkten thermoplastischen Kunststoff gefertigt sind und zu einer Druckkalotte (11) aneinandergefügt sind;
wobei die Kalottensegmente (1) nebeneinander entlang einer azimutalen Richtung (A) der Druckkalotte (11) um einen Mittelpunkt (M) der Druckkalotte (11) herum angeordnet sind;
wobei die integrierte Versteifung (4) entlang einer radialen Richtung (R) der Druckkalotte (11) ausgerichtet ist;
wobei die Kalottensegmente (1) jeweils über die integrierte Versteifung (4) an einen Fügebereich (7) des nächstliegenden Kalottensegments (1) gefügt sind;
wobei die integrierte Versteifung (4) ein Versteifungsprofil (6) aufweist, welches von einer konkaven Innenfläche (2) des jeweiligen Kalottensegments (1) absteht; und
wobei die integrierte Versteifung (4) einseitig als Randversteifung ausgebildet ist.

2. Druckschott (10) nach Anspruch 1, wobei das Versteifungsprofil (6) Z-förmig und/oder Ω-förmig ausgebildet ist.

3. Druckschott (10) nach Anspruch 1 oder 2, wobei die Kalottensegmente (1) durch zumindest eines von Nieten, Schweißen und Kleben aneinandergefügt sind.

4. Druckschott (10) nach einem der Ansprüche 1 bis 3, weiterhin mit:
lokalen Verstärkungen (8), welche an die Kalottensegmente (1) gefügt sind.

5. Druckschott (10) nach Anspruch 4, wobei die lokalen Verstärkungen (8) durch zumindest eines von Nieten, Schweißen und Kleben an die Kalottensegmente (1) gefügt sind.

6. Druckschott (10) nach Anspruch 4 oder 5, wobei zumindest ein Anteil der lokalen Verstärkungen (8) entlang der azimutalen Richtung (A) der Druckkalotte (11) ausgerichtet ist.

7. Druckschott (10) nach einem der Ansprüche 4 bis 6, wobei zumindest ein Anteil der lokalen Verstärkungen (8) ringförmig um Durchgangsöffnungen (8) in den Kalottensegmenten (1) angeordnet ist.

8. Druckschott (10) nach einem der Ansprüche 1 bis 7, wobei die Kalottensegmente (1) eine variable Kalottendicke aufweisen.

9. Druckschott (10) nach einem der Ansprüche 1 bis 8, wobei Fügeübergänge (8) zwischen den Kalottensegmenten (1) mit zumindest einem von Dichtmittel, Füllmaterial und Abdichtelementen geschlossen sind.

10. Luft- oder Raumfahrzeug (100) mit einem Druckschott (10) nach einem der Ansprüche 1 bis 9.

## Claims

1. Pressure bulkhead (10) for pressure-tight axial closure of a pressure fuselage (101) of an aircraft or spacecraft (100) which can be subjected to an internal pressure, with:
a plurality of dome segments (1), each of which is manufactured in one piece with an integrated stiffener (4) from a fiber-reinforced thermoplastic material and are joined together to form a pressure dome (11);
wherein the dome segments (1) are arranged side by side along an azimuthal direction (A) of the pressure dome (11) around a center point (M) of the pressure dome (11);
wherein the integrated stiffener (4) is aligned along a radial direction (R) of the pressure dome (11);
wherein the dome segments (1) are joined via the respective integrated stiffener (4) to a joining area (7) of the adjacent dome segment (1);
wherein the integrated stiffener (4) has a stiffening profile (6) which projects from a concave inner surface (2) of the respective dome segment (1); and
wherein the integrated stiffener (4) is formed on one side as an edge stiffener.

2. Pressure bulkhead (10) according to claim 1, wherein the stiffening profile (6) is Z-shaped and/or Ω-shaped.

3. Pressure bulkhead (10) according to claim 1 or 2, wherein the dome segments (1) are joined together by at least one of riveting, welding and bonding.

4. Pressure bulkhead (10) according to any one of claims 1 to 3, further comprising:
local reinforcements (8) joined to the dome segments (1).

5. Pressure bulkhead (10) of claim 4, wherein the local reinforcements (8) are joined to the dome segments (1) by at least one of riveting, welding and bonding.

6. Pressure bulkhead (10) according to claim 4 or 5, wherein at least a portion of the local reinforcements (8) is aligned along the azimuthal direction (A) of the pressure dome (11).

7. Pressure bulkhead (10) according to any one of claims 4 to 6, wherein at least a portion of the local reinforcements (8) is arranged annularly around through openings (8) in the dome segments (1).

8. Pressure bulkhead (10) according to any one of claims 1 to 7, wherein the dome segments (1) have a variable dome thickness.

9. Pressure bulkhead (10) according to any one of claims 1 to 8, wherein joint transitions (8) between the dome segments (1) are closed with at least one of sealant, filler material and sealing elements.

10. Aircraft or spacecraft (100), having a pressure bulkhead (10) according to any one of claims 1 to 9.

## Revendications

1. Cloison de pression (10) pour la fermeture axiale étanche à la pression d'un fuselage sous pression (101) d'un aéronef ou d'un véhicule spatial (100) pouvant être soumis à une pression interne, comprenant :
plusieurs segments de calotte (1), qui sont fabriqués chacun d'une seule pièce avec un renfort intégré (4) dans une matière thermoplastique renforcée par des fibres et sont assemblés les uns aux autres pour former une calotte de pression (11) ;
dans laquelle les segments de calotte (1) étant disposés les uns à côté des autres le long d'une direction azimutale (A) de la calotte de pression (11) autour d'un centre (M) de la calotte de pression (11) ;
dans laquelle le renfort intégré (4) étant orienté le long d'une direction radiale (R) de la calotte de pression (11) ;
dans laquelle les segments de calotte (1) étant respectivement assemblés par le biais du renfort intégré (4) à une zone d'assemblage (7) du segment de calotte (1) le plus proche ;
dans laquelle le renfort intégré (4) présentant un profilé de renforcement (6) qui fait saillie d'une surface intérieure concave (2) du segment de calotte respectif (1) ; et
dans laquelle le renfort intégré (4) étant conçu d'un côté comme un renfort de bord.

2. Cloison de pression (10) selon la revendication 1, dans laquelle le profilé de renforcement (6) est réalisé en forme de Z et/ou de Ω.

3. Cloison de pression (10) selon la revendication 1 ou 2, dans laquelle les segments de calotte (1) sont assemblés les uns aux autres par au moins l'un parmi le rivetage, le soudage et le collage.

4. Cloison de pression (10) selon l'une des revendications 1 à 3, comprenant en outre des :
des renforts locaux (8) qui sont assemblés aux segments de calotte (1).

5. Cloison de pression (10) selon la revendication 4, dans laquelle les renforts locaux (8) sont assemblés aux segments de calotte (1) par au moins l'un parmi le rivetage, le soudage et le collage.

6. Cloison de pression (10) selon la revendication 4 ou 5, dans laquelle au moins une partie des renforts locaux (8) est orientée le long de la direction azimutale (A) de la calotte de pression (11).

7. Cloison de pression (10) selon l'une des revendications 4 à 6, dans laquelle au moins une partie des renforts locaux (8) est disposée de manière annulaire autour d'ouvertures de passage (8) dans les segments de calotte (1).

8. Cloison de pression (10) selon l'une des revendications 1 à 7, dans laquelle les segments de calotte (1) présentent une épaisseur de calotte variable.

9. Cloison de pression (10) selon l'une quelconque des revendications 1 à 8, dans laquelle des transitions d'assemblage (8) entre les segments de calotte (1) sont fermées avec au moins l'un parmi un agent d'étanchéité, un matériau de remplissage et des éléments d'étanchéité.

10. Aéronef ou engin spatial (100) comportant une cloison de pression (10) selon l'une quelconque des revendications 1 à 9.
